# DEMANDE DE BREVET EUROPEEN

(11) **EP 4 800 281 A1**
(43) Date de publication de la demande: **02.09.2026**
(21) Numéro de dépôt: 26161370.7
(22) Date de dépôt: 27.02.2026
(51) Int. Cl.: F16L 41/14, F16L 55/179, E03B 7/00, F16L 41/08, F16L 55/165

(54) **DISPOSITIF ET PROCÉDÉ DE RÉNOVATION DE CANALISATION**

(30) Priorité: 27.02.2025 FR 2502015
(71) Demandeur: SADE - Compagnie Generale de Travaux d'Hydraulique, 75014 Paris (FR)
(72) Inventeur: HASSINE, Mohsen, 92260 FONTENAY-AUX-ROSES (FR); FORZINI, Yves, 95760 VALMONDOIS (FR); BODAUD, Max, 92260 FONTENAY-AUX-ROSES (FR); NGUYEN, Minh-Tuan, 75005 PARIS (FR)
(74) Mandataire: Cabinet Beau de Loménie

(57) **Abrégé**

Dispositif de rénovation (16) de report de branchement (5) comportant :
un corps principal (17), ledit corps principal (17) comportant une paroi cylindrique (31) et une collerette (22), ladite collerette (22) faisant saillie radialement vers l'extérieur depuis la paroi cylindrique (31) et formant un épaulement (36),
Une bague (18) montée sur le corps principal (17) mobile en translation axialement entre une position de repos et une position de contrainte,
un joint (19) d'étanchéité agencé sur une surface radialement externe (23) de la paroi cylindrique (31) et axialement entre l'épaulement (36) et la bague (18), ledit joint (19) présentant un premier diamètre externe en position de repos de la bague (18) et un deuxième diamètre externe en position de contrainte de la bague (8), le deuxième diamètre externe étant supérieur au premier diamètre externe.

## Description

### Domaine Technique

Le présent exposé concerne la rénovation des canalisations enterrées et, plus particulièrement un dispositif et un procédé de rénovation d'une canalisation de distribution d'eau potable, y compris ses reports de branchements abonnés.

### Technique antérieure

Les réseaux de distribution d'eau potable de la plupart des villes sont vieillissants ou déjà passablement vétustes. Ainsi, les canalisations constituant ces réseaux, le plus souvent en fonte, grise pour les plus anciennes, sont très vétustes et présentent des défauts générateurs de fuites, tels que de la corrosion, des fissures voire des casses de certains tronçons. Naturellement, ces fuites engendrent des pertes importantes et donc un manque à gagner significatif pour les exploitants. Par exemple, en France, on estime que 20% de l'eau potable entrant dans les réseaux de distribution sont perdus sous la forme de fuites avant d'arriver chez le consommateur final.

Pour ces raisons, il est primordial de pouvoir rénover les réseaux de distribution existants. La solution la plus classique pour rénover un tel réseau est de remplacer tout ou partie des canalisations vétustes par des canalisations neuves en tranchée.

Toutefois, un tel remplacement des canalisations nécessite d'importants travaux de voirie avec, notamment, l'ouverture de tranchées tout le long des canalisations à remplacer. La rénovation des reports de branchement connectés sur la canalisation, aussi appelés piquages de raccordement, est également fastidieuse et onéreuse avec le mode opératoire classique consistant à terrasser puis démonter l'ensemble de prise, c'est à dire la bouche à clé, le collier, le robinet de prise et le raccord de jonction avec le branchement abonné, à installer un nouvel ensemble de comptage, à rétablir le branchement existant, à remblayer et compacter la fouille, et enfin à refaire à l'identique les sols.

On comprend alors naturellement que de tels travaux génèrent d'importantes nuisances pour le voisinage, tant sonores et visuelles que pratiques puisque de tels travaux impliquent fréquemment d'interrompre la circulation des véhicules et/ou de détourner la circulation des piétons sur les trottoirs. De plus, un tel remplacement peut être rendu difficile en raison du grand encombrement du sous-sol urbain. Par ailleurs, l'empreinte carbone occasionnée par ces travaux n'est pas négligeable : 1 m linéaire de canalisation de distribution remplacé par ouverture de tranchée équivaut à environ 150Kg équivalent CO2.

En conséquence, il arrive parfois que des travaux de rénovation pourtant nécessaires ne soient pas menés car l'impact de tels travaux sur le quartier serait trop important.

Pour éviter le remplacement complet de la portion de canalisation endommagée, il a été développé un procédé de rénovation de la canalisation endommagée dans lequel un revêtement étanche est appliqué contre la surface interne de la canalisation. Ce revêtement peut prendre différentes formes, par exemple un tubage interne, une chemise structurante ou non structurante, une enduction de résine ou autre. Ce revêtement permet de garantir l'étanchéité de la canalisation au niveau des zones endommagées et/ou de stopper les phénomènes d'endommagement de la canalisation comme par exemple la corrosion.

Cependant, l'étanchéité au niveau des reports de branchement est délicate car le revêtement doit être percé au droit du report de branchement pour permettre la communication entre l'intérieur de la canalisation maintenant délimité par le revêtement et ledit report de branchement. Il est nécessaire d'assurer l'étanchéité de la canalisation tant interne, pour éviter les fuites via le passage formé conjointement dans le revêtement et dans la canalisation, mais également pour éviter une infiltration entre le revêtement et la canalisation qui pourrait dégrader la canalisation par infiltration d'eau sous pression entre la canalisation et le revêtement qui ne jouerait alors plus son rôle, notamment d'étanchéité et/ou de blocage des phénomènes d'endommagement.

Il existe donc un réel besoin pour un dispositif et un procédé de rénovation d'une canalisation de distribution d'eau permettant de rénover une canalisation existante et ses différents reports de branchement et qui soit dépourvu, au moins en partie, des inconvénients inhérents à la méthode connue précitée.

### Exposé de l'invention

Une idée à la base de l'invention est de fournir un dispositif de rénovation de report de branchement, et plus particulièrement de piquage de raccordement de canalisation, permettant l'étanchéification d'un passage formé pour restaurer un report de branchement. En particulier, une idée à la base de l'invention est de permettre une telle étanchéification du passage dans le cadre d'une rénovation de canalisation sans remplacement de ladite canalisation, typiquement dans le cadre d'une réparation de canalisation par insertion d'un revêtement étanche dans ladite canalisation. Ainsi, une idée à la base de l'invention est de permettre d'assurer l'étanchéité d'un passage formé conjointement dans la canalisation et dans le revêtement pour permettre le remplacement d'un report de branchement.

Pour cela, l'invention fournit un dispositif de rénovation de report de branchement comportant :
- un corps principal, ledit corps principal comportant une paroi cylindrique et une collerette, ladite collerette faisant saillie radialement vers l'extérieur depuis la paroi cylindrique et formant un épaulement,
- une bague montée sur le corps principal mobile en translation axialement entre une position de repos et une position de contrainte,
- un joint d'étanchéité agencé sur une surface radialement externe de la paroi cylindrique et axialement entre l'épaulement et la bague, ledit joint présentant un premier diamètre externe en position de repos de la bague et un deuxième diamètre externe en position de contrainte de la bague, le deuxième diamètre externe étant supérieur au premier diamètre externe.

Les termes « interne » et « externe » sont à interpréter au regard d'un axe correspondant. Ainsi, un élément d'une canalisation qualifié « d'externe » est situé éloigné de l'axe de ladite canalisation par comparaison à un élément qualifié « d'interne » qui est lui situé proche de l'axe de la canalisation. De même, un élément du dispositif de rénovation qualifié « d'externe » est éloigné de l'axe principal du dispositif de rénovation, qui correspond à l'axe de la paroi cylindrique du corps principal, par rapport à un élément qualifié d'interne qui est proche dudit axe principal du dispositif de rénovation. Par ailleurs, l'axe principal du dispositif de rénovation définit une direction axiale, la direction radiale étant perpendiculaire audit axe principal du dispositif de rénovation.

Un tel dispositif de rénovation permet d'étanchéifier un passage formé dans une canalisation à rénover de façon simple, fiable et rapide, le passage pouvant être formé dans une ou plusieurs parois de canalisation, par exemple le passage étant formé conjointement dans une canalisation et un revêtement interne logé dans ladite canalisation. En effet, l'insertion dans le passage à étanchéifier du dispositif en position de repos de la bague puis le déplacement de la bague de la position de repos à la position de contrainte suffit à augmenter le diamètre du joint et ainsi engendrer un appui étanche entre le joint et une paroi interne du passage assurant une étanchéité satisfaisante du passage.

En outre, le déplacement de la bague peut entraîner une déformation du joint amenant la partie déformée du joint à recouvrir de manière étanche le pourtour du passage.

Par ailleurs, un tel dispositif ne nécessite pour être installé qu'un simple accès au passage à étanchéifier. Ainsi, ce dispositif peut être utilisé directement dans le cadre d'une rénovation de canalisation par l'intérieur via l'application d'un revêtement et/ou en creusant un simple trou d'accès au passage au niveau du report de branchement, c'est-à-dire sans nécessiter de tranchée pour le remplacement complet de la canalisation.

Un tel dispositif de rénovation de report de branchement peut en outre comporter une ou plusieurs des caractéristiques suivantes, seules ou en combinaison.

Selon un mode de réalisation, le joint est en contact axial d'une part contre la bague et, d'autre part, contre l'épaulement. De préférence, le joint est en contact axial contre la bague et contre l'épaulement lorsque la bague est en position de repos.

Ainsi, un simple déplacement de la bague de la position de repos vers la position de contrainte permet de compresser et déformer le joint dès le début du déplacement de la bague depuis sa position de repos.

La bague peut être montée mobile en translation sur le corps principal de nombreuses manières. De préférence, la bague présente un diamètre externe inférieur au diamètre interne du passage, et donc inférieur au diamètre externe du joint, de manière à permettre l'insertion du dispositif de rénovation dans le passage par le côté dudit dispositif comportant la bague.

Selon un mode de réalisation préférentiel, la paroi cylindrique présente un filetage, c'est-à-dire un pas de vis externe, i.e. sur une surface externe de la paroi cylindrique, et la bague présente un taraudage, c'est-à-dire un pas de vis interne, la bague étant montée mobile axialement en translation sur la paroi cylindrique par engagement du taraudage de la bague et du filetage de la paroi cylindrique.

Un tel montage de la bague sur la paroi cylindrique par coopération entre le filetage et le taraudage est simple à réaliser et permet un déplacement fiable et maîtrisé de la bague sur la paroi cylindrique.

Selon un autre mode de réalisation, la bague est montée mobile en translation sur le corps principal par un montage à baïonnette.

Selon un mode de réalisation, le joint entoure la bague. Ainsi, le déplacement de la bague non seulement déforme radialement vers l'extérieur une portion centrale du joint comprise entre la bague et l'épaulement mais déforme également radialement vers l'extérieur la portion du joint entourant la bague.

De préférence, le joint comporte une languette, ladite languette étant agencée radialement autour de la bague. Dans ce cas, un déplacement de la bague de la position de repos vers la position de contrainte déforme le joint de manière à écarter la languette radialement vers l'extérieur, augmentant de façon rapide et simple le diamètre externe du joint lorsqu'il se déforme depuis son premier diamètre externe à son deuxième diamètre externe.

Selon un mode de réalisation, une surface externe du joint présente au moins un relief faisant saillie radialement vers l'extérieur.

Un ou de tels reliefs peuvent prendre de nombreuses formes. Selon un mode de réalisation, ledit au moins un relief comporte une nervure. Selon un mode de réalisation, ledit au moins un relief comporte collet, c'est-à-dire une couronne en saillie, par exemple formant un profilé en sapin. Selon un mode de réalisation, ledit au moins un relief se développe sur toute la circonférence du joint.

De tels reliefs permettent d'augmenter la prise entre le joint et la paroi interne du passage à étanchéifier et donc d'améliorer l'étanchéité dudit passage.

Selon un mode de réalisation, le joint comporte une lèvre axialement en appui contre l'épaulement.

Une telle lèvre permet un meilleur appui du joint sur l'épaulement lors du déplacement de la bague de la position de repos vers la position de contrainte, forçant ainsi la déformation du joint vers radialement l'extérieur.

Selon un mode de réalisation, la lèvre fait saille radialement vers l'extérieur au-delà de l'épaulement.

Ainsi, le déplacement de la bague de la position de repos vers la position de contrainte peut également amener la lèvre en compression contre une surface interne ou externe de la canalisation entourant le passage, assurant ainsi une meilleure étanchéité dudit passage.

Selon un mode de réalisation, le corps principal comporte une pluralité de dégagements.

De tels dégagements permettent une prise sur le corps principal par un outil adapté afin d'entraîner en rotation le corps principal lorsqu'il est inséré dans le passage à étanchéifier. Une telle rotation permet de visser le corps principal et la bague ensemble assurant ainsi le déplacement de la bague de la position de repos à la position de contrainte de façon simple et rapide. De tels dégagements sont idéalement au nombre de quatre, répartis circonférentiellement de façon régulière. Ces dégagements sont avantageusement réalisés à une jonction entre une surface inférieure de la collerette et une surface interne de la paroi cylindrique.

Selon une variante de réalisation, une surface interne du corps principal présente une forme cylindrique polygonale, de préférence hexagonale. Par exemple, la surface interne du corps principal présente une forme à six pans permettant, de façon analogue aux dégagements ci-dessus, d'entraîner en rotation le corps principal lorsqu'il est inséré dans le passage à étanchéifier au moyen d'un simple outil à six pans aux dimensions adaptées.

De préférence, le joint est configuré pour présenter un diamètre principal externe supérieur à un diamètre interne du passage à étanchéifier. On entend par diamètre principal le diamètre du joint à l'exception des zones singulières telles que la lèvre et le au moins un relief. Ainsi, le dispositif de rénovation selon l'invention peut être inséré en force dans le passage à étanchéifier. Une telle différence de diamètre et l'insertion en force du dispositif de rénovation selon l'invention est particulièrement avantageuse dans le cadre d'un passage formé conjointement par une canalisation et un revêtement interne. En effet, cette insertion en force permet d'assurer un contact entre le joint et la paroi interne à la fois de la canalisation et de son revêtement, assurant ainsi l'étanchéité du passage y compris au niveau de la jonction dans le passage entre la canalisation et le revêtement interne. Selon un mode de réalisation, le diamètre interne du passage est inférieur ou égal au diamètre externe du au moins un relief du joint. Ainsi, l'insertion du dispositif de rénovation dans le passage est une insertion en force.

Selon un mode de réalisation, une distance axiale entre l'épaulement et la bague est supérieure à une épaisseur du passage.

L'invention fournit également une canalisation comportant un passage dans lequel est agencé un dispositif de rénovation tel que ci-dessus.

L'invention fournit également un procédé de rénovation de canalisation, la canalisation comportant un passage à étanchéifier, le procédé comprenant:
- insérer un dispositif de rénovation tel que ci-dessus dans le passage à étanchéifier,
- déplacer la bague de la position de repos vers la position de contrainte de manière à déformer le joint radialement vers l'extérieur et intercaler axialement un pourtour du passage entre une portion déformée du joint et l'épaulement.

Selon un mode de réalisation, la canalisation comporte une canalisation principale et un revêtement interne, le passage étant formé conjointement dans la canalisation principale et le revêtement.

Selon un mode de réalisation, le passage présente un diamètre interne inférieur ou égal au diamètre externe du au moins un relief du joint avant insertion de sorte que l'insertion du dispositif de rénovation dans le passage est une insertion en force.

Selon un mode de réalisation, le déplacement de la bague de la position de repos vers la position de contrainte comprime la lèvre contre la canalisation de sorte que le pourtour du passage soit radialement intercalé entre la portion déformée du joint et la lèvre du joint.

Selon un mode de réalisation, l'insertion du dispositif de rénovation dans le passage se fait depuis l'extérieur de la canalisation vers l'intérieur de la canalisation. Dans ce mode de réalisation, le déplacement de la bague de la position de repos vers la position de contrainte comprime la lèvre contre la surface externe de la canalisation.

Selon un mode de réalisation, l'insertion du dispositif de rénovation dans le passage se fait depuis l'intérieur de la canalisation vers l'extérieur de la canalisation. Dans ce mode de réalisation, le déplacement de la bague de la position de repos vers la position de contrainte comprime la lèvre contre la surface interne de la canalisation.

Les caractéristiques et avantages précités, ainsi que d'autres, apparaîtront à la lecture de la description détaillée qui suit d'exemples de réalisation du dispositif de rénovation de report de branchement et du procédé de rénovation selon l'invention. Cette description détaillée fait référence aux dessins annexés.

### Brève description des dessins

Les dessins annexés sont schématiques et visent avant tout à illustrer les principes de l'exposé. Sur ces dessins, d'une figure à l'autre, des éléments (ou parties d'élément) identiques ou remplissant la même fonction sont repérés par les mêmes signes de référence.
[Fig. 1] La figure 1 représente un exemple de canalisation usagée ;
[Fig. 2] La figure 2 représente une vue en coupe radiale d'un report de branchement de la canalisation de la figure 1 ;
[Fig. 3] La figure 3 est une vue agrandie de l'interface entre la canalisation et le report de branchement en cours de rénovation ;
[Fig. 4] La figure 4 représente une vue en perspective éclatée d'un dispositif de rénovation de report de branchement selon un premier mode de réalisation de l'invention ;
[Fig. 5] La figure 5 représente une vue en coupe du dispositif de rénovation de la figure 4 ;
[Fig. 6] La figure 6 représente une vue en perspective du dessous d'une première variante de réalisation du dispositif de rénovation de la figure 4 ;
[Fig. 7] La figure 7 représente une vue de profil du dispositif de rénovation de la figure 4 selon une deuxième variante de réalisation ;
[Fig.8] La figure 8 représente une vue en perspective du dessous du dispositif de rénovation selon une troisième variante de réalisation.

### Description des modes de réalisation

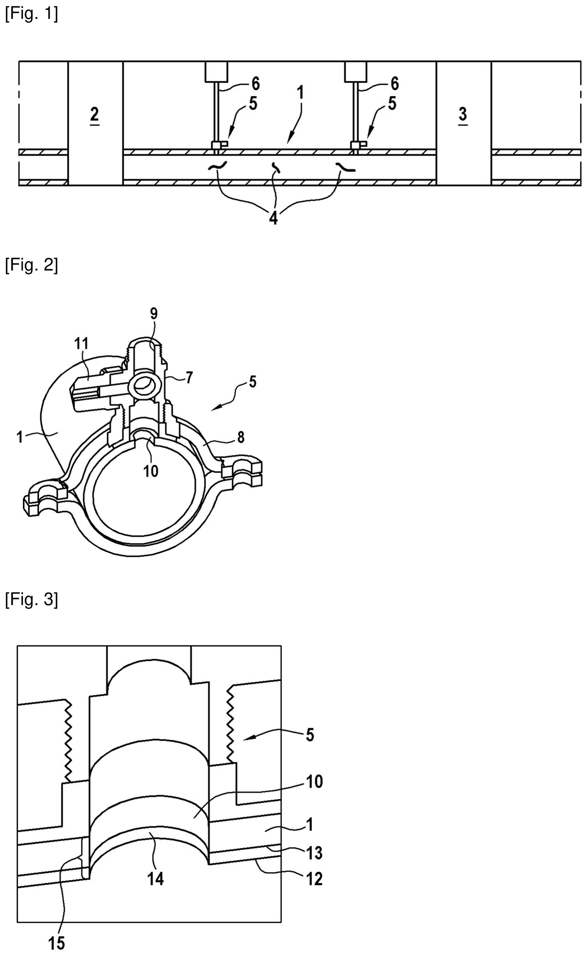

La Figure 1 représente une canalisation 1 enterrée de distribution d'eau potable s'étendant entre un premier puit 2 et un deuxième puit 3 et présentant des défauts 4 responsables de fuites.

Une pluralité de reports de branchement 5 sont connectés sur la canalisation 1 afin d'alimenter des conduites de branchement 6 aboutissant chacun chez un consommateur.

Un exemple de report de branchement 5 est représenté plus en détail sur la figure 2. Il comprend un corps 7 rapporté contre la canalisation 1 à l'aide d'un collier 8. Le corps 7 possède un passage interne 9 formant une veine pour le passage de l'eau. Un orifice 10, mieux visible sur la figure 3, est pratiqué dans la paroi de la canalisation 1 afin de déboucher dans le passage interne 9 du report 5. La conduite de branchement 6 est connectée pour sa part à l'extrémité distale du passage 9. Le report de branchement 5 peut également comprendre un robinet 11 permettant de sectionner la circulation de l'eau dans le passage 9.

Les reports de branchement 5 envisagés ici possèdent des diamètres nominaux de 20 ou 40 mm. Ils peuvent être dirigés vers le haut, comme cela est le cas ici, ou bien dans d'autres directions, en particulier horizontalement, d'un côté ou de l'autre de la canalisation 1.

Dans le cadre d'une rénovation de cette canalisation 1, la circulation du fluide est interrompue dans la canalisation 1 et cette dernière est vidangée. On procède alors à un nettoyage de la canalisation 1 à l'aide d'un furet haute-pression. Puis, un revêtement interne 12 est appliqué contre une surface interne 13 de la canalisation, comme illustré sur la figure 3.

Ce revêtement interne 12 est étanche de manière à former au sein de la canalisation 1, qui présente les défauts 4, une canalisation interne dépourvue desdits défauts 4.

Si ce revêtement interne 12 permet d'assurer l'étanchéité de la canalisation 1 au niveau des défauts 4, il doit cependant également permettre la distribution d'eau ou la circulation de fluide au niveau des reports de branchement 5. Pour cela, ce revêtement interne 12 comporte un orifice 14 au droit de l'orifice 10. L'orifice 10 de la canalisation et l'orifice 14 du revêtement 12 forment conjointement un passage 15 de communication entre l'intérieur de la canalisation interne formée par le revêtement 12 et le passage 9 du report de branchement 5. Eventuellement, l'orifice 10 de la canalisation 1 et l'orifice 14 du revêtement 12 sont uniformisés, par exemple par perçage ou autre, de manière à présenter un même diamètre interne.

Cependant, il est nécessaire d'assurer l'étanchéité du passage 15. Cette étanchéité doit être réalisée entre l'extérieur de la canalisation 1 et l'orifice 10, entre l'intérieur de la canalisation interne formée par le revêtement 12 et l'orifice 14 dudit revêtement 12, mais également entre le revêtement 12 et la canalisation 1 au niveau d'une jonction entre les orifices 10 et 14.

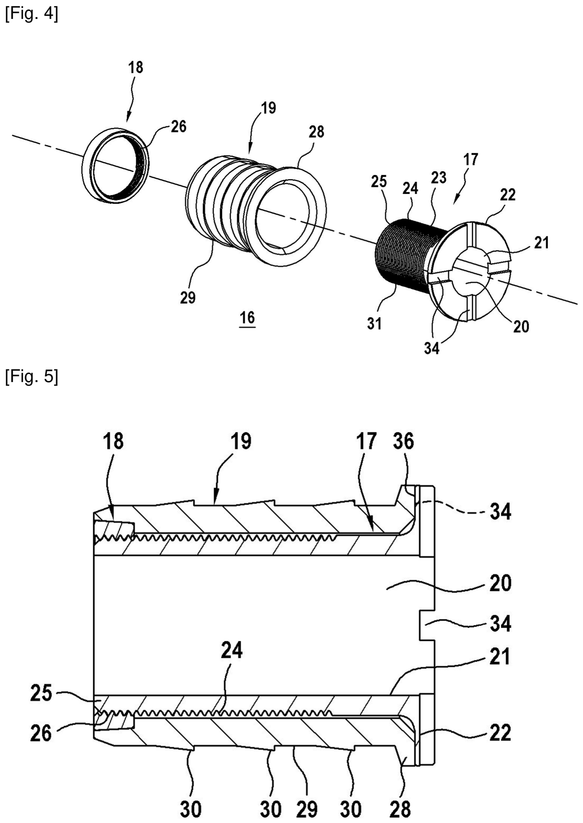

Les figures 4 et 5 illustrent un dispositif de rénovation pour report de branchement selon l'invention, appelé ci-après dispositif de rénovation 16, permettant d'obtenir ces étanchéités.

Comme illustré sur ces figures 4 et 5, le dispositif de rénovation 16 comporte un corps principal 17, une bague 18 et un joint 19.

Le corps principal 17 est creux et comporte une paroi 31 de forme cylindrique de révolution. Ainsi, cette paroi 31 délimite un passage interne 20. Une extrémité inférieure 21 de ce corps principal 17 présente une collerette 22. Cette collerette 22 fait saillie radialement vers l'extérieur depuis une surface externe 23 de la paroi 31. La collerette 22 forme un épaulement 36.

La surface externe 23 de la paroi 31 présente en outre un filetage 24 agencé au niveau d'une extrémité supérieure 25 de la paroi 31, typiquement l'extrémité axialement opposée à l'extrémité inférieure 21.

La bague 18 comporte un taraudage 26 complémentaire du filetage 24. Plus particulièrement, la bague 18 est montée sur la paroi 31 par engagement du taraudage 26 sur le filetage 24. Ainsi, la bague 18 est montée mobile en translation axialement, et plus particulièrement mobile selon un mouvement hélicoïdal, sur la paroi 31. La bague 18 présente avantageusement un diamètre externe inférieur au diamètre interne du passage 15 de manière à permettre l'insertion du dispositif de rénovation 16 dans le passage 15 par le côté dudit dispositif comportant la bague 18.

Le joint 19 entoure la paroi 31. Plus particulièrement, le joint 19 présente une portion principale agencée axialement entre la bague 18 et l'épaulement 36. Une extrémité supérieure du joint 19 présente une languette 35 entourant radialement la bague 18.

Une extrémité inférieure du joint 19 présente une lèvre 28 se développant radialement vers l'extérieur et en appui contre l'épaulement 36.

Par ailleurs, une surface externe 29 du joint 19 présente des reliefs formés par des collets 30, par exemple formant des profilés en sapin sur le mode de réalisation illustré sur les figures 4 et 5.

Avantageusement, un diamètre externe du joint entre deux collets 30 est supérieur à un diamètre interne du passage 15. La différence de diamètre entre ledit diamètre externe du joint 19 et le diamètre interne du passage 15 est faible de manière à permettre l'insertion en force du dispositif de rénovation 16 dans le passage 15.

Cette insertion en force permet de garantir un contact étanche entre le joint 19 et une paroi interne du passage 15. Ainsi, l'étanchéité est assurée entre le revêtement 12 et la canalisation 1 au niveau des orifices 10 et 14 formants le passage 15 mais également au niveau de la jonction entre le revêtement 12 et la canalisation 1 dans le passage 15.

Les collets 30 permettent en outre un meilleur appui du joint 19 sur la paroi interne du passage 15 et bloquent le retrait du dispositif de rénovation hors du passage 15 même en présence d'une forte pression dans la canalisation 1.

Avantageusement, la surface externe 29 du joint est biseautée au niveau de la languette 35. Typiquement, la languette 35 présente un profil tronconique. Une telle portion biseautée facilite l'insertion en force et le centrage du dispositif de rénovation 16 dans le passage 15.

Le corps principal 17 comporte en outre des dégagements 34, visibles sur la figure 4. Ces dégagements 34, au nombre de quatre sur le mode de réalisation illustré sur la figure 4, sont des rainures formées sur la face inférieure de la collerette 22. Ces dégagements 34 sont répartis de façon régulière circonférentiellement.

Les dégagements 34 permettent, en coopération avec un outil adapté, d'entrainer le corps principal 17 en rotation afin de visser la bague 18 sur la paroi 4. Lors de cette rotation du corps principal 17, la bague 18 se déplace ainsi d'une position de repos dans laquelle le joint 19 est sujet aux simples contraintes radiales liées à l'engagement en force dans le passage 15 à une position de contrainte dans laquelle le joint 19 est également compressé axialement entre la bague 18 et l'épaulement 36 formé par la collerette 22.

La compression axiale du joint 19 entre la bague 18 et l'épaulement 36 déforme le joint 19 radialement vers l'extérieur, ce qui augmente encore l'étanchéité du passage 15 en augmentant la pression exercée par le joint 19 sur la paroi interne du passage 15.

En outre, la compression axiale du joint 19 lors du déplacement de la bague de sa position de repos telle qu'illustrée sur la figure 5 à la position de contrainte déforme radialement vers l'extérieur l'extrémité supérieure du joint 19 et plus particulièrement la languette 35. Cette déformation de la languette 35 est facilitée lorsque ladite languette 35 est biseauté comme expliqué ci-dessus. La languette 35 est ainsi déformée radialement vers l'extérieur lors du déplacement de la bague 18, ce qui augmente le diamètre externe du joint 19 et amène la languette 35 en appui contre la surface externe de la canalisation 1 autour de l'orifice 10.

L'appui de la languette 35 contre la surface externe de la canalisation 1 autour de l'orifice 10 assure une étanchéité de la canalisation avec l'extérieur au niveau de l'orifice 10. En outre, le vissage de la bague 18 exerçant un appui sur la surface externe de la canalisation 1 permet également d'assurer l'appui de l'épaulement 36 contre la surface interne du revêtement 12, et plus particulièrement de la lèvre 28 contre ladite surface interne du revêtement 12 autour de l'orifice 14 dudit revêtement 12. De façon analogue à l'appui de la languette 35 sur la surface externe de la canalisation 1, l'appui de la lèvre 28 contre la surface interne du revêtement 12 permet d'assurer l'étanchéité entre la canalisation interne formée par le revêtement 12 et l'orifice 14 dudit revêtement 12.

Ainsi, le dispositif de rénovation permet, par l'appui de la languette 35 déformée sur la surface externe de la canalisation 1 et l'appui de la lèvre 28 sur la surface interne du revêtement 12, d'appuyer le joint 19 contre le pourtour du passage 15 et donc d'en assurer l'étanchéification.

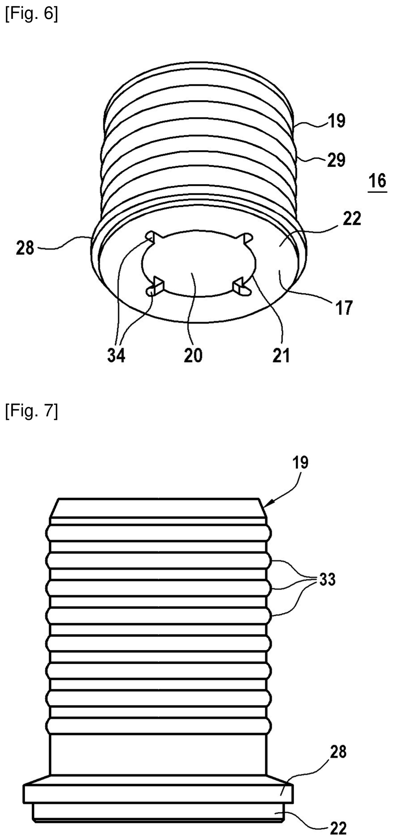

La figure 6 illustre une première variante de réalisation du dispositif de rénovation 16 selon l'invention. Cette variante diffère du mode de réalisation illustré sur les figures 4 et 5 en ce que les dégagements 34 sont ménagés à la jonction entre le passage interne 20 du corps principal 17 et une face inférieure de la collerette 22.

La figure 7 illustre une deuxième variante de réalisation du dispositif de rénovation 16 selon l'invention. Cette variante diffère du mode de réalisation illustré sur les figures 4 et 5 en ce que les collets 30 sont des nervures 33. De façon analogue au mode de réalisation des figures 4 et 5, ces nervures 33 permettent un meilleur contact entre le joint 19 et la paroi interne du passage 15, permettant une meilleure étanchéité du passage 15 et un maintien en position du dispositif de rénovation dans le passage 15 malgré la pression du liquide circulant dans la canalisation 1.

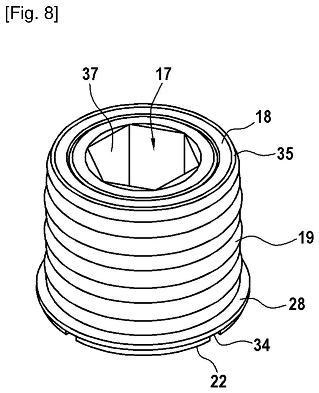

La figure 8 illustre une troisième variante de réalisation du dispositif de rénovation 16 selon l'invention. Cette variante diffère des modes de réalisation illustré sur les figures 4 et 5 en ce qu'une surface interne 37 de la paroi 31 du corps principal 17 est de forme hexagonale, à six pans. Cette forme à six pans permet, de façon analogue aux dégagement 34 illustrés sur les figures 4 à 6, l'utilisation d'un outil à six pans pour entraîner en rotation le corps principal 17 et engendrer le déplacement de la bague 18 depuis la position de repos vers la position de contrainte. Dans le mode de réalisation illustré sur cette figure 8, les dégagements 34 sont également prévus sur la collerette 22.

Dans un mode de réalisation non illustré, le filetage sur la surface externe de la paroi du corps principal peut présenter un longueur axiale supérieure à la longueur axiale de la bague. Dans ce cas, un cylindre rapporté comportant un taraudage complémentaire du filetage de la paroi du corps principal peut être monté sur ladite paroi du corps principal par vissage. Un tel cylindre rapporté permet de bloquer le déplacement axial de la bague sur la paroi lors du vissage et définit donc la position de contrainte de la bague.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif de rénovation (16) de report de branchement (5), ledit dispositif étant configuré pour être inséré dans un passage formé conjointement dans une canalisation et dans un revêtement interne logé dans ladite canalisation, le dispositif de rénovation comportant :
un corps principal (17), ledit corps principal (17) comportant une paroi cylindrique (31) et une collerette (22), ladite collerette (22) faisant saillie radialement vers l'extérieur depuis la paroi cylindrique (31) et formant un épaulement (36),
Une bague (18) montée sur le corps principal (17) mobile en translation axialement entre une position de repos et une position de contrainte,
un joint (19) d'étanchéité agencé sur une surface radialement externe (23) de la paroi cylindrique (31) et axialement entre l'épaulement (36) et la bague (18), ledit joint (19) présentant un premier diamètre externe en position de repos de la bague (18) et un deuxième diamètre externe en position de contrainte de la bague (8), le deuxième diamètre externe étant supérieur au premier diamètre externe, le joint étant configuré pour présenter un diamètre principal externe supérieur à un diamètre interne du passage de manière à permettre une insertion en force du dispositif de rénovation dans le passage et assurer un contact entre le joint et à la fois une paroi interne de la canalisation et une paroi interne du revêtement interne.

2. Dispositif de rénovation (16) selon la revendication 1, dans lequel le joint (19) est en contact axial d'une part contre la bague (18) et, d'autre part, contre l'épaulement (36).

3. Dispositif de rénovation (16) selon la revendication 1 ou 2, dans lequel la paroi (31) cylindrique présente un filetage (24) et la bague (18) présente un taraudage (26), la bague (28) étant montée mobile axialement en translation sur la paroi (36) cylindrique par engagement du taraudage (26) de la bague (18) et du filetage (24) de la paroi (36) cylindrique.

4. Dispositif de rénovation (16) selon l'une des revendications 1 à 3, dans lequel le joint (19) comporte une languette (35), ladite languette (35) étant agencée radialement autour de la bague (18).

5. Dispositif de rénovation (16) selon l'une des revendications 1 à 4, dans lequel une surface externe (29) du joint (19) présente au moins un relief (30, 33) faisant saillie radialement vers l'extérieur.

6. Dispositif de rénovation (16) selon l'une des revendications 1 à 5, dans lequel le joint (19) comporte une lèvre (28) axialement en appui contre l'épaulement (36).

7. Dispositif de rénovation (16) selon la revendication 6, dans lequel la lèvre (28) fait saille radialement vers l'extérieur au-delà de l'épaulement (36).

8. Dispositif de rénovation (16) selon l'une des revendications 1 à 7, dans lequel le corps principal (17) comporte une pluralité de dégagements (34).

9. Procédé de rénovation de canalisation (1), la canalisation (1) comportant un passage (15) à étanchéifier, ledit passage étant formé conjointement dans la canalisation et dans un revêtement interne logé dans la canalisation, le procédé comprenant :
- insérer en force un dispositif de rénovation (16) selon l'une des revendications 1 à 8 dans le passage (15) à étanchéifier de manière à assurer un contact entre le joint et à la fois une paroi interne de la canalisation et une paroi interne du revêtement interne,
- déplacer la bague (18) de la position de repos vers la position de contrainte de manière à déformer le joint (19) radialement vers l'extérieur et intercaler axialement un pourtour du passage (15) entre une portion déformée du joint (19) et l'épaulement (36).

10. Procédé de rénovation de canalisation (1) selon la revendication 9, dans lequel le passage (15) présente un diamètre interne inférieur ou égal au diamètre externe d'au moins un relief du joint (19).

11. Procédé de rénovation de canalisation (1) selon la revendication 9 ou 10, dans lequel le dispositif de rénovation (16) est selon l'une des revendications 6 ou 7 et dans lequel le déplacement de la bague (18) de la position de repos vers la position de contrainte comprime la lèvre (28) contre la canalisation de sorte que le pourtour du passage (15) soit axialement intercalé entre la portion déformée du joint (19) et la lèvre (28) du joint (19).
